# EUROPÄISCHE PATENTSCHRIFT

(11) **EP 1 926 692 B1**
(45) Veröffentlichungstag und Bekanntmachung des Hinweises auf die Patenterteilung: **05.09.2018**
(21) Anmeldenummer: 06793482.8
(22) Anmeldetag: 13.09.2006
(51) Int. Cl.: C04B 22/14

(54) **VERFAHREN ZUR HERSTELLUNG EINES CHROMATREDUZIERERS FÜR ZEMENTZUSAMMENSETZUNGEN**
PROCESS FOR MANUFACTURING A CHROMATE REDUCER FOR CEMENTITIOUS COMPOSITIONS
PROCÉDÉ POUR LA FABRICATION D'UN RÉDUCTEUR DE CHROMATE POUR COMPOSITIONS CIMENTAIRES

(30) Priorität: 15.09.2005 DE 102005044196
(43) Veröffentlichungstag der Anmeldung: 04.06.2008
(73) Patentinhaber: Sachtleben Chemie GmbH, 47198 Duisburg (DE)
(72) Erfinder: AMIRZADEH-ASL, Djamschid, 47445 Moers (DE)
(74) Vertreter: Nobbe, Matthias
(86) Internationale Anmeldenummer: PCT/EP2006/066321
(87) Internationale Veröffentlichungsnummer: WO 2007/031537

(56) Entgegenhaltungen:
- EP-A- 1 559 694
- EP-A- 1 710 215
- WO-A-2005/097682
- DE-U1-202005 020 518

## Beschreibung

Gegenstand der vorliegenden Erfindung ist ein Verfahren zur Herstellung eines Reduktionsmittels. In der Baustoffindustrie kommt Zement als fein gemahlenes hydraulisches Bindemittel zur Herstellung von Beton, Mörtel, Betonsteinen und Fertigteilen zur Anwendung. Bei der Verarbeitung des Zements ist nachteilig, dass dieser aufgrund seines Chromatgehalts Allergien auslösen und Hautekzeme hervorrufen kann. Hierbei ist insbesondere das lösliche Chromat die Ursache der allergischen Reaktionen.
Es ist bekannt, Eisen(II)sulfat als Reduktionsmittel für das im Zement in Spuren vorliegende Chromat(VI) einzusetzen. Das Eisen(II)sulfat reduziert das lösliche Chrom(VI) in unlösliches Chrom(III). Hierdurch können gesundheitliche Beeinträchtigungen vermieden werden. Der Einsatz von Eisen(II)sulfat als Zusatz im Zement zur Chromatreduzierung ist beispielsweise in DE-A-197 44 035 oder EP-A-1 314 706 beschrieben. Die gleiche Problematik wird auch in der Fachliteratur behandelt (Manns, W.; Laskowski, Ch.: Eisen(II)sulfat als Zusatz zur Chromatreduzierung; BE-Z: Beton, H. 2/1999, S. 78-85).
Grundsätzlich ist festzustellen, dass die Reaktionsfähigkeit des Eisen(II)sulfats im Zement mit zunehmender Lagerungsdauer bzw. Alterung abnimmt. Die übliche Lagerungsfähigkeit von chromatarmem Zement beträgt drei bis maximal sechs Monate. Bei Überschreiten des Verfallsdatums darf der Zement im Grunde genommen nicht mehr verwendet werden, weil das Reduktionsmittel seine Wirksamkeit verloren hat und der Chromatanteil im Zement dann über der gesetzlich zulässigen Norm von 2 ppm ansteigt.

Zu bemerken ist auch, dass sich der Einsatz von Eisen(II)sulfat, insbesondere wenn dieses aufwendig aufbereitet wird, bevor es dem Zement zugegeben wird, nachteilig auf die Kosten des hydraulischen Bindemittels auswirkt.

Zur Überwindung dieses Mangels schlägt EP-A-1 544 182 daher einen Chromatreduzierer vor, der zwei Eisen(II)sulfat-Komponenten enthält. Die erste Komponente besteht aus Filtersalz aus der Titandioxidproduktion, dem ein mineralischer Säureregulator zugegeben ist. Die zweite Komponente ist Grünsalz.

Feuchtes Grünsalz fällt als Abfall oder Nebenprodukt bei verschiedenen industriellen Prozessen, beispielsweise der Titandioxidherstellung aus Titanerz, an. Bei der Titandioxidherstellung nach dem Sulfatverfahren wird das fein gemahlene Titanerz mit konzentrierter Schwefelsäure aufgeschlossen. Das im Erz enthaltene Eisendioxid reagiert zu Eisensulfat, das Titandioxid zu Titanylsulfat. Die Abtrennung des Eisensulfats vom Titanylsulfat erfolgt durch Kristallisation. Aufgrund der geringeren Wasserlöslichkeit kristallisiert das Eisensulfat zu grünem Eisen(II)sulfat aus und kann abgetrennt werden. Dieses so genannte Grünsalz ist mithin ein Abfallprodukt der Titandioxidherstellung. Es ist in der Konsistenz feucht, besitzt jedoch die gleichen chemischen Eigenschaften, insbesondere was die Chromat(VI)-Reduzierung anbelangt, wie trockenes, gemahlenes und aufbereitetes Eisen(II)sulfat. Es besteht im Wesentlichen aus Eisen(II)sulfat-Heptahydrat (nachfolgend Heptahydrat genannt). Dabei ist Grünsalz wesentlich kostengünstiger als das trockene, gemahlene und aufbereitete Eisen(II)sulfat.

Gleiches wie für das Grünsalz gilt für das Filtersalz aus der Titandioxidproduktion; dieses besteht ebenfalls überwiegend aus Eisen(II)sulfat, jedoch ausschließlich aus Eisen(II)sulfat-Monohydrat (nachfolgend Monohydrat genannt). Da das Filtersalz einen sehr hohen Anteil an freier Schwefelsäure enthält, muss es im Säuregehalt reduziert werden. Hierzu kommt ein mineralischer Säureregulator zum Einsatz, der mit dem Filtersalz gemischt wird.

Nachteil des in EP-A-1 544 182 offenbarten Verfahrens ist die mangelnde Temperaturbeständigkeit und Oxidationsanfälligkeit des Zements bei Einsatz von Heptahydrat. So führt bei Lagerung über 40°C das freigesetzte Kristallwasser zur Klumpenbildung und Oxidation von Fe(II) zum Fe(III), wodurch die Aktivität der Chromatreduzierung sinkt. Außerdem ist dieses Verfahren sehr aufwendig, was die Kosten des Zements in die Hohe treibt.

Einen ähnlichen Weg wie EP-A-1 544 182 schlägt DE-B-10 2004 019 191 vor. Dabei wird dem Zement ein Zusatzmittel zur Chromatreduktion auf Basis Filtersalz zugegeben. Dieses Filtersalz enthält entweder als wässrige Lösung oder in einer pulverförmigen Mischung mit einem Trägermaterial beispielsweise Kalkhydrat, Kalksteinmehl oder gefällte Kieselsäure.

Ein Nachteil dieses Verfahrens ist, dass im Filtersalz Eisen(II)sulfat fast ausschließlich als Monohydrat vorliegt. Auf Grund seiner geringeren Löslichkeit ist eine höhere Dosierung zum Zement erforderlich. Zur Erhöhung der Wirksamkeit bei Chromatreduzierung wird daher in DE-B-10 2004 019 191 vorgeschlagen, dem Filtersalz Heptahydrat in Form von Grünsalz zuzusetzen, um ein rieselfähiges und dosierbares Produkt zu erhalten. Dabei wird das Filtersalz zuerst mit dem Trägermaterial vermischt und anschließend das feuchte Grünsalz zugegeben.

Es hat sich jedoch gezeigt, dass die Reaktion von anhaftender Schwefelsäure mit beispielsweise Kalk bei dieser Verfahrensweise unvollständig ist. Ein Teil des Kalks bleibt unreagiert im Produkt. Das hat zur Folge, dass bei Lagerung durch die Aufnahme von Feuchte das Erzeugnis hydraulisch bindet und sich seine Konsistenz beispielsweise durch Klumpenbildung verändert. Außerdem ist dieses Verfahren sehr aufwendig und teuer.

EP 1 559 694 betrifft ein Zusatzmittel zur Chromatreduzierung im Zement auf Basis von Filtersalz. Das Zusatzmittel enthält Filtersalz entweder als wässrige Lösung oder in einer pulverförmigen Mischung mit einem Trägermaterial.

Aufgabe der vorliegenden Erfindung ist es daher, ein verbessertes Verfahren zur Herstellung eines Reduktionsmittels für Chromat bereitzustellen, das die Nachteile des Standes der Technik überwindet.

Erfindungsgemäß wird die Aufgabe überraschenderweise durch die Merkmale des Hauptanspruchs gelöst. Vorzugsweise Ausgestaltungen finden sich in den Unteransprüchen.
Im Detail wird die Aufgabe durch ein Verfahren zur Herstellung eines Reduktionsmittels gelöst, wobei dem Reduktionsmittel basisch reagierende Stoffe, bevorzugt basische Alkali- und/oder Erdalkalisalze, zugegeben werden, wobei Filtersalz als Eisen(II)sulfat- Grundlage eingesetzt und dem Reduktionsmittel das Wasser vor, während und/oder nach der Umsetzung des Eisen(II)sulfats mit basisch reagierenden Stoffen zugegeben wird, und das Wasser das im Filtersalz vorliegende Eisen(II)sulfat-Monohydrat teilweise oder ganz in Tetra- und/oder Heptahydrat überführt.
In der erfindungsgemäßen Ausgestaltung wird Filtersalz als Eisen(II)sulfat-Grundlage für das erfindungsgemäß hergestellte Reduktionsmittel eingesetzt. Die Anteile der verschiedenen Hydrate werden dabei durch die Zugabe von Wasser zur Eisen(II)sulfat-Grundlage eingestellt.
Außerdem können verfahrensgemäß der Eisen(II)sulfat-Grundlage basisch reagierende Stoffen zugegeben werden. Als basisch reagierende Stoffen werden erfindungsgemäß bevorzugt basische Alkali- und/oder Erdalkalisalze wie NaOH, Ca(OH)2, CaO, CaCO3, Mg(OH)2, MgO, MgCO3, Ba(OH)2, BaO, BaCO3 oder beliebige Mischungen dieser Salze zugesetzt.
Die Zugabe von Wasser kann vor, während und/oder nach der Umsetzung der Eisen(II)sulfat-Grundlage mit basischen Alkali- und/oder Erdalkalisalze erfolgen. Die Umsetzung der Eisen(II)sulfat-Grundlage kann mit einer Lösung und/oder Suspension aus basischen Alkali- und/oder Erdalkalisalzen durchgeführt werden. In diesem Falle kann auf eine weitere Wasserzugabe verzichtet werden.
Zusätzlich zum Filtersalz können andere eisen(II)sulfathaltige Stoffe, beispielsweise Grünsalz, eingesetzt werden. Das erfindungsgemäß hergestellte Reduktionsmittel kann in Baustoffen, insbesondere in Zement, Mörtel und/oder Putz, eingesetzt werden.
Weiterhin kann dem Reduktionsmittel verfahrensgemäß Trocken- und/oder Trennmittel zugesetzt werden, beispielsweise SiO₂, Flugasche, Braunkohleasche, Natriumsilikat, insbesondere in Form von Silikagel, Calciumsilikat, Magnesiumsilikat, Natriumaluminiumsilikat, Kaliumaluminiumsilikat, Phosphorpentoxid, CaSO₄ (Anhydrit) und/oder Zement.

Außerdem kann dem erfindungsgemäß hergestelltem Erzeugnis zusätzliches Wasser zugegeben werden.
Abhängig vom Anteil der Trocken- und/oder Trennmittel einerseits und der Zugabe von Wasser andererseits können so die Rieselfähigkeit oder die pneumatische Förderbarkeit des erfindungsgemäß hergestellten Erzeugnisses eingestellt werden. Die Trocken- und/oder Trennmittel werden in einer Menge zwischen 0,1 und 20 Gew.-%, bevorzugt zwischen 0,1 und 10 Gew.-%, besonders bevorzugt zwischen 0,1 und 4,5 Gew.-% untergemischt.
Das Reduktionsmittel kann verfahrensgemäß in Form eines Pulvers, in Form von Granulaten oder in Form einer wässrigen Losung bzw. Suspension vorliegen. Nötigenfalls kann das Reduktionsmittel auch in einer Mühle gemahlen werden. Die Herstellung des Reduktionsmittel kann ausgehend von Filtersalz durch Zugabe von basischen Alkali- und/oder Erdalkalisalzen wie NaOH, Ca(OH)₂, CaO, CaCO₃, Mg(OH)₂, MgO, MgCO₃, Ba(OH)₂, Bao, BaCO₃ sowie Wasser erfolgen.
Weiterhin können Trocken- und/oder Trennmittel, beispielsweise SiO₂, Natriumsilikat, insbesondere in Form von Silikagel, Calciumsilikat, Magnesiumsilikat, Natriumaluminiumsilikat, Kaliumaluminiumsilikat, Phosphorpentoxid, CaSO₄ (Anhydrit), und/ oder Zement zugegeben werden.

Die Vorteile der Erfindung gegenüber dem Stand der Technik sind nachfolgend zusammengefasst:
- abhängig von der Zugabe von Wasser kann das im Filtersalz im Wesentlichen vorliegende Monohydrat teilweise oder ganz in Tetra- und/oder Heptahydrat überführt werden. Somit ist ausgehend vom Filtersalz ein Erzeugnis erhältlich, das je nach Bedarf die verschiedenen Hydratformen in den gewünschten Anteilen enthält. Hiermit kann überraschenderweise die Wirksamkeit der Chromatreduktion im Zement gesteigert werden. Dadurch kann das erfindungsgemäß hergestellte Reduktionsmittel im Vergleich zum Stand der Technik in einer niedrigeren Dosierung eingesetzt werden, was Kostenvorteile bedingt. Bei gleicher Dosierung des Reduktionsmittels kann die Lagerstabilität des Zementes erhöht werden.
- die Reaktion der basischen Verbindungen mit der dem Filtersalz anhaftenden Schwefelsäure erfolgt deutlich schneller und in höherem Maße, vor allem bei tieferen Temperaturen, insbesondere unterhalb von 160°C, bevorzugt unterhalb von 100°C, besonders bevorzugt unterhalb von 80°C. Dadurch wird die Oxidation von Fe(II) zu Fe(III) verhindert und die freie Schwefelsäure minimiert. Außerdem ist der freie Kalk oder das freie Kalkhydrat im Endprodukt deutlich reduziert, so dass hier keine Verklumpung des Erzeugnisses bei Lagerung zu erwarten ist.
- Das erfindungsgemäß hergestellte Erzeugnis zeigt eine sehr gute Lagerstabilität. Eine Mischung aus dem erfindungsgemäßen Erzeugnis und Zement zeigen auch nach mehreren Wochen Lagerung bei einer Temperatur von 50°C keine Klumpenbildung.

Ein erfindungsgemäß hergestelltes Reduktionsmittel kann somit sein:
- ein erfindungsgemäß hergestelltes Reduktionsmittel, das Eisen(II)sulfat enthält, wobei im Reduktionsmittel das Verhältnis von Monohydrat zu Tetrahydrat zu Heptahydrat durch die Zugabe von Wasser gesteuert ist, und das ein oder mehrere basisch reagierende Stoffe, vorzugsweise basische Alkali- und/oder Erdalkalisalze enthält;
- ein erfindungsgemäß hergestelltes Reduktionsmittel, das 1 bis 90, bevorzugt 5 bis 50, besonders bevorzugt 10 bis 40, ganz besonders bevorzugt 15 bis 35, insbesondere bevorzugt 20 bis 30 Gew.-% Monohydrat und 1 bis 80, bevorzugt 5 bis 50, besonders bevorzugt 10 bis 40, ganz besonders bevorzugt 10 bis 20 Gew.-% Tetrahydrat enthält;
- ein erfindungsgemäß hergestelltes Reduktionsmittel, das 1 bis 90, bevorzugt 5 bis 50, besonders bevorzugt 10 bis 35 ganz besonders bevorzugt 20 bis 30 Gew.-% Monohydrat und 1 bis 60, bevorzugt 5 bis 40, besonders bevorzugt 10 bis 30 Gew.-% Tetrahydrat und 1 bis 40, bevorzugt 3 bis 30, besonders bevorzugt 5 bis 20, ganz besonders bevorzugt 5 bis 15 Gew.-% Heptahydrat enthält;
- ein erfindungsgemäß hergestelltes Reduktionsmittel, das 1 bis 90, bevorzugt 5 bis 50, besonders bevorzugt 10 bis 40, ganz besonders bevorzugt 15 bis 35, insbesondere bevorzugt 20 bis 30 Gew.-% Monohydrat und 1 bis 80, bevorzugt 5 bis 50, besonders bevorzugt 10 bis 40, ganz besonders bevorzugt 10 bis 20 Gew.-% Heptahydrat enthält;
- ein erfindungsgemäß hergestelltes Reduktionsmittel, das 1 bis 50, bevorzugt 5 bis 40, besonders bevorzugt 10 bis 30, ganz besonders bevorzugt 15 bis 25 Gew.-% Tetrahydrat und 5 bis 80, bevorzugt 10 bis 50, besonders bevorzugt 15 bis 40, ganz besonders bevorzugt 15 bis 35 Gew.-% Heptahydrat enthält;
- ein erfindungsgemäß hergestelltes Reduktionsmittel, das Eisen(II)sulfat und ein oder mehrere basisch reagierende Stoffe, vorzugsweise basische Alkali- und/oder Erdalkalisalze enthält;
- ein erfindungsgemäß hergestelltes Reduktionsmittel, das Eisen(II)sulfat enthalt, wobei die basischen Alkali- und/oder Erdalkalisalze ausgewählt sind aus: NaOH, Ca(OH)₂, CaO, CaCO₃, Mg(OH)₂, MgO, MgCO₃, Ba(OH)₂, BaO, BaCO₃ oder beliebigen Mischungen dieser Stoffe;
- ein erfindungsgemäß hergestelltes Reduktionsmittel, das Eisen(II)sulfat und ein oder mehrere Trocken- und/oder Trennmittel enthält;
- ein erfindungsgemäß hergestelltes Reduktionsmittel, das Eisen(II)sulfat enthalt, wobei die Trocken- und/oder Trennmittel ausgewählt sind aus: SiO₂, Flugasche, Braunkohleasche, Natriumsilikat, insbesondere in Form von Silikagel, Calciumsilikat, Magnesiumsilikat, Natriumaluminiumsilikat, Kaliumaluminiumsilikat, Phosphorpentoxid, CaSO₄ (Anhydrit), Zement oder beliebigen Mischungen dieser Stoffe;
- ein erfindungsgemäß hergestelltes Reduktionsmittel, das Eisen(II)sulfat enthält, wobei der Anteil der Trocken- und/oder Trennmittel zwischen 0,1 und 20 Gew.-%, bevorzugt zwischen 0, 1 und 10 Gew.-%, besonders bevorzugt zwischen 0, 1 und 4,5 Gew.-% beträgt;
- ein erfindungsgemäß hergestelltes Reduktionsmittel, das Eisen(II)sulfat auf der Grundlage von Eisen(II)sulfat- Monohydrat enthält;
- ein erfindungsgemäß hergestelltes Reduktionsmittel, das Eisen(II)sulfat auf der Grundlage von Filtersalz enthält, das zusätzlich zum Filtersalz andere eisen(II)sulfathaltige Stoffe, insbesondere Grünsalz, enthält;

Das erfindungsgemäße Verfahren ist somit ein Verfahren nach Anspruch 1. Dabei kann die Reaktion der basisch reagierenden Stoffe mit der dem Filtersalz anhaftenden Schwefelsäure bei Temperaturen unterhalb von 100°C, vorzugsweise unterhalb von 80°C ablaufen.

Dem Reduktionsmittel können die basisch reagierenden Stoffe als Feststoff, Lösung oder Suspension zugegeben werden.

Dem Reduktionsmittel wird erfindungsgemäß das Wasser vor, während und/oder nach der Umsetzung des Eisen(II)sulfats mit basisch reagierenden Stoffen Wasser zugegeben.

Erfindungsgemäß sind die basisch reagierenden Stoffe bevorzugt basische Alkali- und/oder Erdalkalisalze, besonders bevorzugt ausgewählt aus: NaOH, Ca(OH)₂, CaO, CaCO₃, Mg(OH)₂, MgO, MgCO₃, Ba(OH)₂, BaO, BaCO₃ oder beliebigen Mischungen dieser Stoffe;
Erfindungsgemäß kann dem Reduktionsmittel Trocken- und/oder Trennmittel zugegeben werden.

Erfindungsgemäß können dem Reduktionsmittel die Trocken- und/oder Trennmittel vor, während und/oder nach der Umsetzung des Eisen(II)sulfats mit Wasser bzw. vor, während und/oder nach der Umsetzung des Eisen(II)sulfats mit basisch reagierenden Stoffen zugegeben werden;
Erfindungsgemäß können die Trocken- und/oder Trennmittel ausgewählt werden aus: SiO₂, Flugasche, Braunkohleasche, Natriumsilikat, insbesondere in Form von Silikagel, Calciumsilikat, Magnesiumsilikat, Natriumaluminiumsilikat, Kaliumaluminiumsilikat, Phosphorpentoxid, CaSO₄ (Anhydrit), Zement oder beliebigen Mischungen dieser Stoffe;
Erfindungsgemäß können die Trocken- und/oder Trennmittel in einer Menge zwischen 0,1 und 20 Gew.-%, bevorzugt zwischen 0,1 und 10 Gew.-%, besonders bevorzugt zwischen 0, 1 und 4,5 Gew.-% untergemischt werden;
Erfindungsgemäß kann dem Reduktionsmittel zusätzliches Wasser zugegeben werden.

Erfindungsgemäß wird als eisen(II)sulfathaltiger Stoff Filtersalz, besonders Eisen(II)sulfat-Monohydrat verwendet, wobei zusätzlich andere eisen(II)sulfathaltige Stoffe, insbesondere Grünsalz, eingesetzt werden können.

Das erfindungsgemäß hergestellte Reduktionsmittel kann zur Reduktion von Chromat in Baustoffen, insbesondere in Zement, Mörtel und/oder Putz und/oder Zubereitungen aus diesen und/oder hydraulischen Bindemitteln, die aus Zement, Mörtel und/oder Putz und/oder Zubereitungen aus diesen herstellbar sind, verwendet werden.

Dabei kann das erfindungsgemäß hergestellte Reduktionsmittel in Anteilen von 0,01 bis 6 Gew.-%, bevorzugt von 0, 1 bis 3 Gew.-%, besonders bevorzugt 0,2 bis 2 Gew.-% in Zement, Mörtel und/oder Putz und/oder Zubereitungen aus diesen und/oder hydraulischen Bindemitteln, die aus Zement, Mörtel und/oder Putz und/oder Zubereitungen aus diesen herstellbar sind, enthalten sein..

Die Erfindung wird durch die nachfolgenden Beispiele erläutert, ohne sie darauf einzuschränken.

### Beispiel 1:

500 g Filtersalz, das bei der Herstellung von Titandioxid nach dem Sulfatverfahren durch die Aufkonzentrierung der eisensulfathaltigen verdünnten Schwefelsäure anfällt und einen Schwefelsäuregehalt von 20,5 Gew.-% sowie einen Eisengehalt von 14 Gew.-% hat, wird in einem Mischer mit 65 g (13 Gew.-% bezogen auf Filtersalz) Kalkhydrat (Ca(OH)2) umgesetzt. Anschließend werden bei laufendem Mischer 35 g Wasser durch Aufsprühen hinzubegeben. Das entstandene Reduktionsmittel enthält folgende Eisen(II)sulfate in den aufgeführten Anteilen:

**Tabelle 1:**

| Formel | Bezeichnung | Anteil [Gew.-%] |
|---|---|---|
| Fe(II)SO₄*H₂O | Monohydrat | 22 |
| Fe(II) SO₄*4 H₂O | Tetrahydrat | 11 |
| Fe(II) SO₄*7 H₂O | Heptahydrat | 7 |

### Beispiel 2:

500 g Filtersalz aus Beispiel 1 werden in einem Mischer mit 50 g (10 Gew.-% bezogen auf Filtersalz) Kalkhydrat umgesetzt. Anschließend werden bei laufendem Mischer 35 g Wasser durch Aufsprühen hinzugegeben. Das entstandene Reduktionsmittel enthält folgende Eisen(II)sulfate in den aufgeführten Anteilen:

**Tabelle 2:**

| Formel | Bezeichnung | Anteil [Gew.-%] |
|---|---|---|
| Fe(II)SO₄*H₂O | Monohydrat | 26 |
| Fe(II) SO₄*4 H₂O | Tetrahydrat | 14,5 |

### Vergleichsbeispiel 1:

500 g Filtersalz aus Beispiel 1 werden in einem Mischer mit 65 g (13 Gew.-% bezogen auf Filtersalz) Kalkhydrat umgesetzt. Das entstandene Produkt enthält als Eisen(II)sulfat ausschließlich Fe(II)SO₄*H₂O, also Monohydrat mit einem Anteil von 35 Gew.-%.

Fig. 1 zeigt ein Röntgendiffraktogramm als Ergebnis der Untersuchung einer Probe gemäß Beispiel 1.

Fig. 2 zeigt ein Röntgendiffraktogramm als Ergebnis der Untersuchung einer Probe gemäß Beispiel 2.

Fig. 3 zeigt ein Röntgendiffraktogramm als Ergebnis der Untersuchung einer Probe gemäß dem Vergleichsbeispiel.

Für alle Fig. gilt:
Ordinate: Lin (Cps),
Abszisse: 2-Theta-Scale.

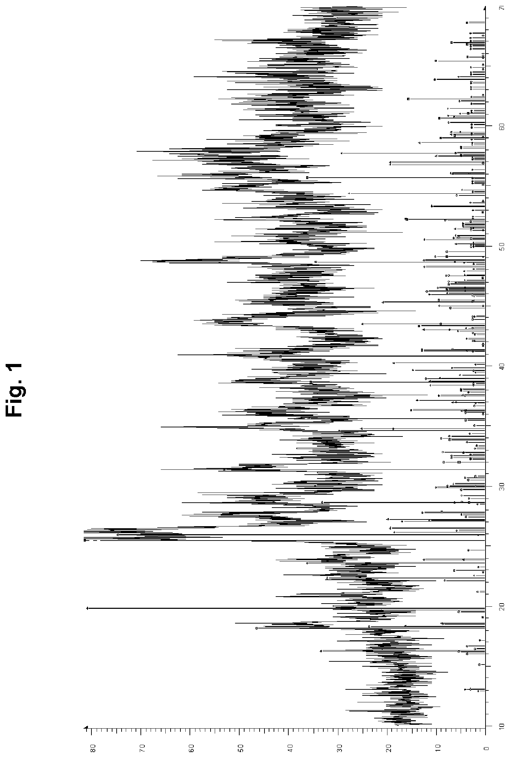

Für Fig. 1 gilt:
[√]: E8U-38K/5-5.8 - File: 2005017233-2.RAW - Type: 2Th/Th locked - Start: 10.000° - End: 70.000° - Step: 0.020° - Step time: 1.2 s - Temp.: 25°C (Room) - Time Started: 2 s - 2-Theta: 10.000° - Theta 5.000° - Phi: 0. Operations: Import.
[■] 72-0916(C)-Anhydrite- Ca(S04) -Y: 159.57 %- d x by: 1. - WL: 1.5406- Ortho rhombic- a7.00600 - b6.99800 - c 6.24500 - alpha 90.000 - beta 90.000 - gamma 90.000 - Base-centred - Amma (63) - 4 -306.180- l/lc
[◇] 72-0534(C)- Rozenite- FeSO4(H20)4-Y: 98.76 % - d x by: 1. - WL: 1.5406-Monoclinic - a 5.97000 - b 13.64000 - c 7.98000 - alpha 90.000 - beta 90.430 - gamma 90.000 - Primitive- P21/n (14) - 4 - 649.799 - l/lc
[●] 22-0633(*) Melanterite, syn - FeSO4•7H20 - Y: 56.58 % - d x by: 1. -WL: 1.5406 - Monoclinic- a 14.077- b 6.509 - c 11.054 - alpha 90.000 - beta 105.60 - gamma 90.000 - Primitive- P21/c (14) - 4 -975.536 - F30=
[▲] 21-0925(D)- Szomolnokite, syn - FeSO4•H20 - Y: 91.36% - d x by: 1. - WL: 1.5406 - Monoclinic- a 7.624 - b 7.468 - c 7.123 - alpha 90.000 - beta 115.9 - gamma 90.000 - Base-centred-A2/a (15) - 4 - 364.820- F29

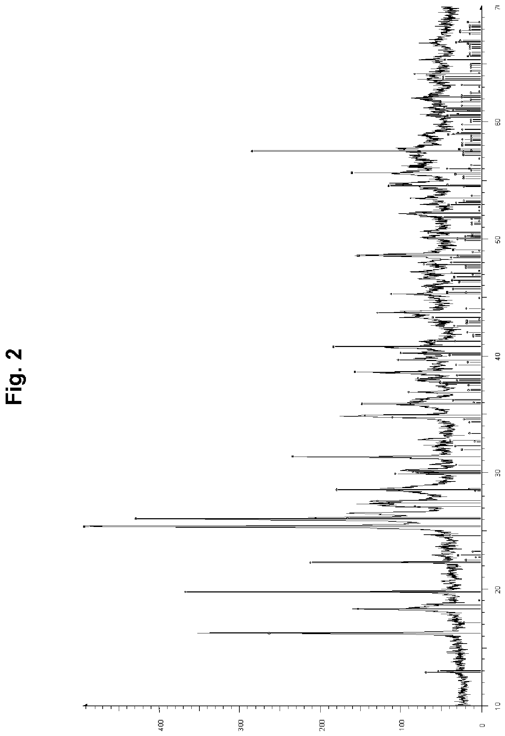

Für Fig. 2 gilt:
[√]: E8U-38K/5-5.8 - File: 2005017233-2.RAW - Type: 2Th/Th locked - Start: 10.000° - End: 70.000° - Step: 0.020° - Step time: 1.2 s - Temp.: 25°C (Room) - Time Started: 16 s - 2-Theta: 10.000° - Theta 5.000° - Phi: Operations: Import.
[■] 72-0916(C)-Anhydrite- Ca(S04) -Y: 116.05 %- d x by: 1. - WL: 1.5406- Ortho rhombic- a7.00600 - b6.99800 - c 6.24500 - alpha 90.000 - beta 90.000 - gamma 90.000 - Base-centred - Amma (63) - 4 -306.180- l/lc
[◇] 01-0612(D)- Szomolnokite - FeSO4•H20/FeO•SO3•H2O -Y: 86.49 % - d x by: 1. - WL: 1.5406 -
[●] 76-0655(C) Iron Sulfate Hydrate - FeSO4(H2O)4 - Y: 74.07 % - d x by: 1. -WL: 1.5406 - Monoclinic- a 5.97000- b 13.64000 - c 7.98000 - alpha 90.000 - beta 90.430 - gamma 90.000 - Primitive- P21/n (14) - 4 - 64

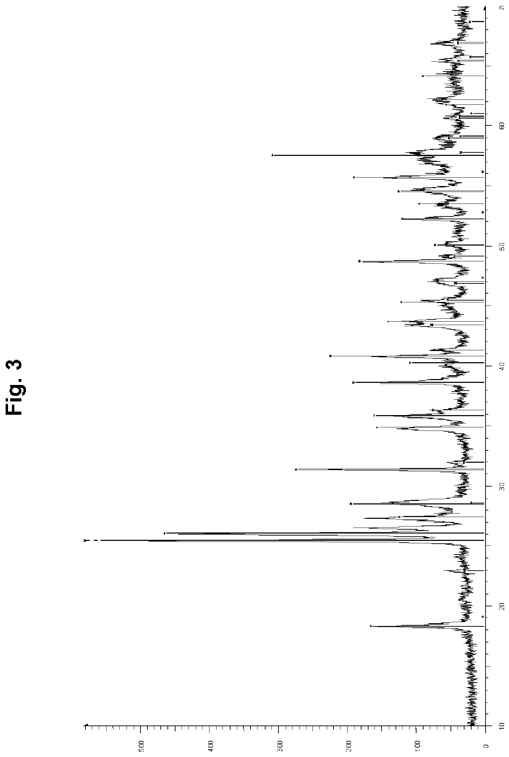

Für Fig. 3 gilt:
[√]: E8U-09/06-5.1 - File: 2006007536-2.RAW - Type: 2Th/Th locked - Start: 10.000° - End: 70.000° - Step: 0.020° - Step time: 1.2 s - Temp.: 25°C (Room) - Time Started: 2 s - 2-Theta: 10.000° - Theta 5.000° - Phi: Operations: Import.
[■] 72-0503(C)-Anhydrite- Ca(S04) -Y: 135.73 %- d x by: 1. - WL: 1.5406- Ortho rhombic- a6.99100 - b6.99600 - c 6.23800 - alpha 90.000 - beta 90.000 - gamma 90.000 - Base-centred - Amma (63) - 4 -305.095- l/lc
[◇] 01-0612(D)- Szomolnokite - FeSO4•H20/FeO•SO3•H2O -Y: 85.14 % - d x by: 1. - WL: 1.5406 -

## Patentansprüche

1. Verfahren zur Herstellung eines Reduktionsmittels, wobei dem Reduktionsmittel basisch reagierende Stoffe, bevorzugt basische Alkali- und/oder Erdalkalisalze, zugegeben werden **dadurch gekennzeichnet, dass** Filtersalz als Eisen(II)sulfat-Grundlage eingesetzt und dem Reduktionsmittel Wasser vor, während und/oder nach der Umsetzung des Eisen(II)sulfats mit basisch reagierenden Stoffen zugegeben wird, und das Wasser das im Filtersalz vorliegende Eisen(II)sulfat-Monohydrat teilweise oder ganz in Tetra- und/oder Heptahydrat überführt.

2. Verfahren nach Anspruch 1, **dadurch gekennzeichnet, dass** die basischen Alkali- und/ oder Erdalkalisalze ausgewählt sind aus: NaOH, Ca(OH)₂, CaO, CaCO₃, Mg(OH)₂, MgO, MgCO₃, Ba(OH)₂, BaO, BaCO₃ oder beliebigen Mischungen dieser Stoffe.

3. Verfahren nach Anspruch 1 oder 2, **dadurch gekennzeichnet, dass** dem Reduktionsmittel Trocken- und/oder Trennmittel zugegeben werden.

4. Verfahren nach mindestens einem der Ansprüche 1 bis 3, **dadurch gekennzeichnet, dass** dem Reduktionsmittel die Trocken- und/oder Trennmittel vor, während und/oder nach der Umsetzung des Eisen(II)sulfats mit Wasser bzw. vor, während und/oder nach der Umsetzung des Eisen(II)sulfats mit basisch reagierenden Stoffen zugegeben werden.

5. Verfahren nach mindestens einem der Ansprüche 1 bis 4, **dadurch gekennzeichnet, dass** die Trocken- und/oder Trennmittel ausgewählt sind aus: SiO₂, Natriumsilikat, insbesondere in Form von Silikagel, Calciumsilikat, Magnesiumsilikat, Natriumaluminiumsilikat, Kaliumaluminiumsilikat, Phosphorpentoxid, CaSO₄ (Anhydrit), Zement oder beliebigen Mischungen dieser Stoffe.

6. Verfahren nach mindestens einem der Ansprüche 1 bis 5, **dadurch gekennzeichnet, dass** die Trocken- und/oder Trennmittel in einer Menge zwischen 0,1 und 20 Gew.-%, bevorzugt zwischen 0,1 und 10 Gew.-%, besonders bevorzugt zwischen 0,1 und 4,5 Gew.-% untergemischt werden.

7. Verfahren nach mindestens einem der Ansprüche 1 bis 6, **dadurch gekennzeichnet, dass** zusätzlich zum Filtersalz andere eisen(II)sulfathaltige Stoffe, vorzugsweise Grünsalz, eingesetzt werden.

## Claims

1. A method for producing a reducing agent, wherein basic substances, preferably alkali salts and/or alkaline earth salts are added to the reducing agent, **characterized in that** filter salt is used as the iron(II) sulfate base, and water is added to the reducing agent before and/or after the reaction of the iron(II) sulfate with basic substances, and the water partially or completely converts the iron(II) sulfate monohydrate present in the filter salt into tetrahydrate and/or heptahydrate.

2. The method according to claim 1, **characterized in that** the basic alkali salts and/or alkaline earth salts are selected from NaOH, Ca(OH)₂, CaO, CaCO₃, Mg(OH)₂, MgO, MgCO₃, Ba(OH)₂, BaO, CaCO₃ or any mixtures of these substances.

3. The method according to claim 1 or 2, **characterized in that** desiccants and/or release agents are added to the reducing agent.

4. The method according to at least one of claims 1 to 3, **characterized in that** the desiccants and/or release agents are added to the reducing agent before and/or after the reaction of the iron(II) sulfate with water and/or before, during and/or after the reaction of the iron(II) sulfate with basic substances.

5. The method according to at least one of claims 1 to 4, **characterized in that** the desiccants and/or release agents are selected from SiO₂, sodium silicate, in particular in the form of silica gel, calcium silicate, magnesium silicate, sodium aluminum silicate, potassium aluminum silicate, phosphorus pentoxide, CaSO₄ (anhydrite), cement or any mixtures of these substances.

6. The method according to at least one of claims 1 to 5, **characterized in that** the desiccants and/or release agents are mixed into the composition in an amount between 0.1% and 20% by weight, preferably between 0.1% and 10% by weight, especially preferably between 0.1% and 4.5% by weight.

7. The method according to at least one of claims 1 to 6, **characterized in that** other substances containing iron(II) sulfate, preferably green salt are used in addition to the filter salt.

## Revendications

1. Procédé de préparation d'un agent de réduction, ledit agent de réduction étant enrichi en substances à réaction basique, s'agissant préférentiellement de sels alcalins et/ou alcalinoterreux basiques, **caractérisé en ce que** l'on met en oeuvre du sel de purification en tant que sulfate de fer(II) de départ et l'on ajoute de l'eau audit agent de réduction, ledit ajout étant réalisé avant, pendant et/ou après la réaction dudit sulfate de fer(II) avec des substances à réaction basique, et l'on transforme le monohydrate de sulfate de fer(II), tel qu'il est présent dans le sel de purification, partiellement ou complètement en tétra- et/ou heptahydrate.

2. Procédé selon la revendication 1, **caractérisé en ce que** les sels alcalins et/ou alcalinoterreux basiques sont choisis parmi : le NaOH, le Ca(OH)₂, le CaO, le CaCO₃, le Mg(OH)₂, le MgO, le MgCO₃, le Ba(OH)₂, le BaO, le BaCO₃ ou un quelconque mélange entre ces substances.

3. Procédé selon les revendications 1 ou 2, **caractérisé en ce que** l'on ajoute audit agent de réduction des agents déshydratants et/ou anti-agglomérants.

4. Procédé selon au moins une des revendications 1 à 3, **caractérisé en ce que** l'ajout des agents déshydratants et/ou anti-agglomérants audit agent de réduction est réalisé avant, pendant et/ou après la réaction dudit sulfate de fer(II) avec de l'eau ainsi qu'avant, pendant et/ou après la réaction dudit sulfate de fer(II) avec des substances à réaction basique.

5. Procédé selon au moins une des revendications 1 à 4, **caractérisé en ce que** lesdits agents déshydratants et/ou anti-agglomérants sont choisis parmi : le SiO₂, le silicate de sodium, notamment sous forme de gel de silice, le silicate de calcium, le silicate de magnésium, le silicate de sodium-aluminium, le silicate de potassium-aluminium, le pentoxyde de phosphore, le CaSO₄ (anhydrite), le ciment ou un quelconque mélange entre ces substances.

6. Procédé selon au moins une des revendications 1 à 5, **caractérisé en ce que** lesdits agents déshydratants et/ou anti-agglomérants sont ajoutés de manière à ce que leur quantité représente entre 0,1 et 20 % en poids, de préférence entre 0,1 et 10 % en poids, avec une préférence particulière entre 0,1 et 4,5 % en poids, du mélange obtenu.

7. Procédé selon au moins une des revendications 1 à 6, **caractérisé en ce que**, outre ledit sel de purification, on met en oeuvre d'autres matières contenant du sulfate de fer(II), s'agissant préférentiellement de vitriol vert.
